# EUROPEAN PATENT SPECIFICATION

(11) **EP 2 853 433 B1**
(45) Date of publication and mention of the grant of the patent: **15.11.2017**
(21) Application number: 14186440.5
(22) Date of filing: 25.09.2014
(51) Int. Cl.: B60K 35/00, B60K 37/06, B60R 11/02, G06F 3/042, B60R 11/00

(54) **Button selection trace light indicator**
Knopfauswahlspurleuchtanzeige
Indicateur lumineux de trace pour sélection de bouton

(30) Priority: 30.09.2013 US 201361884285 P; 24.09.2014 US 201414495364
(43) Date of publication of application: 01.04.2015
(73) Proprietor: Continental Automotive Systems, Inc., Auburn Hills, MI 48326 (US)
(72) Inventor: Brown, Arthur Stephan, Sterling Heights, MI Michigan 48312 (US); Brueninghaus, Andreas, 51674 Wiehl (DE); Drescher, Susan Adelle, Bloomfield Hills, MI Michigan 48304 (US); Drury, Robert Lee, Rochester Hills, MI Michigan 48309 (US); Hansen, Robert John, Waterford, MI Michigan 48329 (US); Klotz, Alexander, Mountain View, CA California 94043 (US); Schenkewitz, Christian Andreas, 320041 Singapore (SG)
(74) Representative: Bonn, Roman Klemens

(56) References cited:
- EP-A2- 2 174 833
- DE-A1-102010 042 376
- US-A1- 2006 256 073
- US-A1- 2007 257 889

## Description

### BACKGROUND

Vehicle instrument panels are increasingly including digital displays to display graphics and to provide the control interface for many vehicle systems. The digital display generates graphic objects that are actuated with either fixed buttons (controlling one feature) or soft buttons on a touch sensitive display. The soft buttons can be changed as the features change on the screen, allowing for many different features to be controlled by one touch sensitive display. The use of fixed buttons are sometime desired when the digital display is spaced a distance from an operator. When a fixed button separate from a display is used to control a feature on a display, it may be unclear which button pairs with which feature on a display, or if there is any association at all.

Accordingly, vehicles that utilize reconfigurable buttons that are associated to a function on a display/screen are typically located directly next to the display so that the feature is physically located on the display next to the fixed button. However such a feature limits the location of the digital display as the associated buttons must be located within reach of a vehicle operator.

Document US 2006/256073 A1 discloses a control display assembly according to the preamble of claim 1 comprising a display configured to generate images corresponding to a graphic feature and indicative of a function of a copier/scanner, a button disposed a distance from the display, a light path extending between the button and the display, wherein the light path is configured to activate when the button is activated which activated button corresponds with actuation of a function represented by the graphic feature generated on the display, and wherein the light path corresponds with and extends to the graphic feature on the display, wherein the graphic feature is associated with the button.

Document DE 10 2010 042376 A1 discloses a control display assembly comprising a display configured to generate images corresponding to a graphic feature and indicative of a function of a vehicle, a number of buttons disposed in a distance from the display, illuminable areas extending between the buttons and the display, wherein a respective illuminable area is configured to activate i.e. to be illuminated when one of the buttons is activated which activated button corresponds with actuation of a function represented by the graphic feature generated on the display, and wherein the illuminable area corresponds with and extends to the graphic feature on the display, and wherein the graphic feature is associated with the button.

Document US 2007/257889 A1 discloses a hand held remote control comprising buttons and a display wherein the buttons are illuminated upon actuation by the display and wherein an actuated button corresponds to a graphic feature on the display

Document EP 2 174 833 A2 discloses a display system for a vehicle comprising a plurality of lights. The display system is used in combination with a vehicle warning system wherein the lights are positioned in a line of sight of a driver of the vehicle such that the driver may readily notice when the lights are actuated upon a warning situation.

### SUMMARY

A disclosed control display assembly includes a digital display for generating graphic features that represent vehicle system operating parameters and functions that are selectable by an operator. A plurality of buttons are spaced apart from the display and are associated with one of the graphic features generated by the display through a corresponding light path. The light path extends between one of the buttons and a corresponding graphic feature to provide a visual association between the button and the graphic feature generated by the display. In an additional example, a trace is generated on the display that continues the visual association of the light path onto the display and to the graphic feature. In addition to the buttons the control display assembly further comprises a dial which is rotatable to select between a first light path and a second light path to provide for actuation of more than one graphic feature.

The light path and the trace provide a user with a visual association that identifies which of the button corresponds with actuation of a function represented by the graphic feature generated on the display. The light path visually links each of the fixed buttons to a corresponding graphic feature on the display thereby creating an easily understood link of the pairing of the graphic feature and the selected button. The visual link provided by the light path enables location of the fixed buttons closer to the user or driver while also enabling mounting of the display farther from the operator and closer to the user or driver's line of sight. Placement of the display closer to the driver's line of sight is desirable as it reduces off road glance times.

Although the different examples have the specific components shown in the illustrations, embodiments of this disclosure are not limited to those particular combinations. It is possible to use some of the components or features from one of the examples in combination with features or components from another one of the examples.

These and other features disclosed herein can be best understood from the following specification and drawings, the following of which is a brief description.

### BRIEF DESCRIPTION OF THE DRAWINGS

Figure 1 is a schematic view of an example vehicle instrument panel.
Figure 2 is a schematic view of a vehicle console including a digital display.
Figure 3 is a schematic cross-section of an example console.
Figure 4 is a schematic cross-section of another example console.
Figure 5 is a schematic view of another vehicle console.

### DETAILED DESCRIPTION

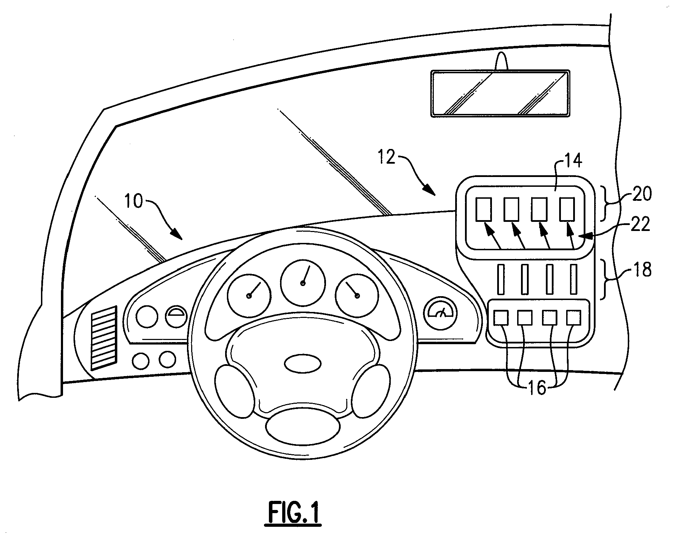

Referring to Figure 1, a vehicle instrument panel 10 includes a center console 12 with a digital display 14 for generating graphic features 20 that represent vehicle system operating parameters and functions that are selectable by an operator. A plurality of buttons 16 are spaced apart from the display 14 and are associated with one of the graphic features 20 generated by the display 14 through a corresponding light path 18. The light paths 18 extend between one of the buttons 16 and a corresponding graphic feature 20 to provide a visual association between the button 16 and the graphic feature 20 generated by the display 14. In this example, a trace 22 is generated on the display 14 that continues the visual association of the light path 18 onto the display 14 and to the graphic feature 20.

The light path 18 and the trace 22 provide a user with a visual association that identifies which of the button 16 corresponds with actuation of a function represented by the graphic feature 20 generated on the display 14. The light path 18 visually links each of the fixed buttons 16 to a corresponding graphic feature 20 on the display 14 thereby creating an easily understood link of the pairing of the graphic feature 20 and the selected button 16. The visual link provided by the light path 18 enables location of the fixed buttons 16 closer to the user or driver while also enabling mounting of the display 14 in farther form the operator and closer to the user or driver's line of sight. Placement of the display 14 closer to the driver's line of sight is desirable as it reduces off road glance times.

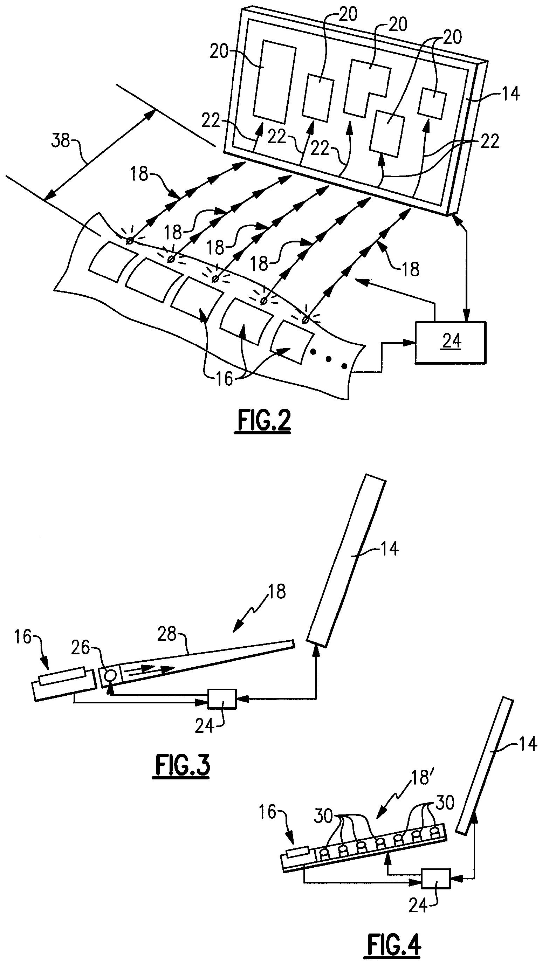

Referring to Figure 2, with continued reference to Figure 1, the display 14 is located at a distance 38 from at least one of the buttons 16. It should be understood that the distance 38 illustrated is for disclosure purposes and will vary depending on application specific mounting requirements. Moreover, although a linear distance 38 is schematically indicated, the distance 38 may not be straight or in one plane, but could be spaced from the display in any number of configurations.

The example embodiment includes a plurality of buttons 16. The buttons 16 may be push buttons, cap sense buttons, IR buttons, but are not limited to those examples.

A controller 24 is associated with the buttons 16, the light guide 18 and the display 14 to provide an association between the buttons 16 and the graphic features 20 generated on the display 14. As the graphic features 20 change to facilitate actuation and monitoring of different vehicle systems, the controller 24 generates commands that associate each of the buttons 16 with a desired graphic feature 20. Moreover, the controller 24 manages the generation of the traces 22 generated on the display 14 between the light paths 18 and the corresponding graphic feature 20.

In the example, each of the plurality of buttons 16 has an associated light path 18. Each associated light path 18 extends to the display 14 from a point adjacent to its associated button 16. Generation of the graphic features 20 on the display 14 initiate illumination of the light path 18 and the trace 22 on the display to provide a visual display and indication that is easily recognized by a user of the association between one of the buttons 16 and the corresponding graphic feature 20. When one of the buttons 16 is activated, the corresponding light path 18 from a point adjacent the button 16 and extending to the display 14 can be activated to generate an additional illuminated display that confirms the association between the button 16 and the graphic feature 20. The illuminated display generated by the light path 18 can include sequentially illumination of lights along the path 18, flashing, and color changes along with any combination that provides a visual confirmation to a vehicle operator.

Referring to Figure 3, the light path 18 includes a light source 26 that generates light that is communicated into a light guide 28. The light guide 28 directs light along the light path 18 between the button 16 and the display 14. The use of the light guide 28 enables the use of a single light source for each light path 18. The light sources 26 can be any lighting device such as a light emitting diode (LED) or a group of red, green and blue light emitting diodes to enable various color combinations.

Referring to Figure 4, another light path 18' includes a plurality of light sources 30 arranged between the button 16 and the display 14. The light sources 30 can be any lighting device such as a light emitting diode (LED) or a group of red, green and blue light emitting diodes to enable various color combinations. The plurality of light sources 30 spaced apart along the light path 18' enables illumination in desired sequences to create action displays that change responsive to actuation of a corresponding button 16, or when prompted by another desired input or triggering action. The plurality of light sources 30 may also be controlled to create lighting animation features to indicate direction, actuation or another feature coordinated by the controller 24 of systems within the vehicle. For example, when the button 16 is activated, the light path activates in sequence starting from button to display feature, and the feature changes in look to show activation.

Accordingly, operation of the console 12 can include associating the generated graphic feature for control of a desired function on the display 14. The controller 24 than provides for the association of one of the buttons 16 or other fixed input device with the graphic features 20. The light path is then illuminated between the fixed input device and the display to visually indicate the association between the fixed input device and the image generated on the display.

The illumination can include illumination of the light path 18 in a first manner prior to actuation of the input device such as for example a steady illumination. This could follow with an illumination of the light path in a second manner different than the first manner responsive to actuation of the input device to provide visual feedback and confirmation of actuation of a function represented by the generated image. The second manner could be a lighting animation including flashing of lights, or a sequence of lights that point between the buttons 16 and the display 14. The lighting animation could also include other animation sequences.

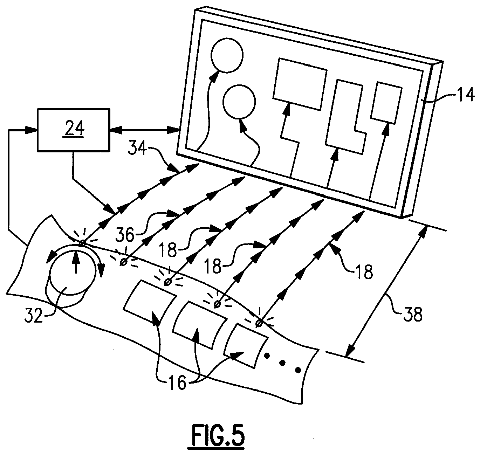

Referring to Figure 5, with reference to Figure 2, in the example shown in Figure 2, each button 16 is associated with a single light path 18. However, other embodiments could include at least one of the buttons not having an associated light path or according to the invention at least one of the buttons having a plurality of associated light paths. Figure 5 illustrates a console 12' according to the embodiment of the invention that includes a dial 32 in addition to the buttons 16. The dial 32 is rotatable to select between a first light path 34 and a second light path 36. The dial 32 therefore provides for actuation of more than one graphic feature. Rotation of the dial 32 to one of the first and second light paths 34, 36 can be visually indicated by a desired lighting animation.

The disclosed center console 12 enables placement and mounting of button 16 away from the associated display 14. With the example console 12, the buttons 16, no longer need be physically located next to the display 14. The combination of the light path 18 and the trace 22 enable the buttons 16 to be located a distance away from the display 14. The display 14 may be located in the driver's line of sight, while the reconfigurable buttons 16 are located close to the driver's reach distance. The console 12 also enables the use of fewer buttons 16 to operate an unlimited number of features that are represented by the digital display 14.

Accordingly, the light path 18 provides an association between generated graphic features on a display with fixed buttons spaced apart from the display. Moreover, the example console 12 enables the amount of fixed buttons to be minimized while changing the display 14 to show their various functions.

As one of ordinary skill would recognize, this disclosure is not limited to an automotive application. Rather, this disclosure relates to any application of buttons and display screens.

## Claims

1. A control display assembly comprising:
a display (14) configured to generate images corresponding to at least one graphic feature (20) and indicative of a vehicle function;
at least one button (16) disposed a distance (38) from said display (14);
a light path (18) extending between the at least one button (16) and the display (14), wherein the light path (18) is configured to activate when the button (16) is activated which activated button (16) corresponds with actuation of a vehicle function represented by the graphic feature (20) generated on the display (20), and
wherein the light path (18) corresponds with and extends to the graphic feature (20) on the display (14), the graphic feature (20) associated with the at least one button (16);
**characterised in that**
in addition to the at least one button (16) the control display assembly further comprises a dial (32) which is rotatable to select between a first light path (34) and a second light path (36) to provide for actuation of more than one graphic feature (20).

2. The display assembly according to claim 1, wherein the light path (18, 34, 36) comprises a plurality of individual light sources (30) oriented between the at least one button (16), the dial (32) and the display (14) and/or a light source (30) and a light guide (28) illuminable by the light source (30).

3. The display assembly according to claim 1 or 2, wherein the at least one button (16) comprises a plurality of buttons (16) and a corresponding plurality of light paths (18) illuminable to associate at least some of the plurality of buttons (16) with images generated on the display (14).

4. The display assembly as recited in claim 3, wherein the display (14) is configured to generate different images for each of the plurality of buttons (16) and the dial (32), respectively, for different vehicle systems.

5. The display assembly as recited in claim 3 or 4, wherein the display (14) is configured to generate a trace (22) between the light path (18) and the image generated on the display (14) to associate one of the plurality of light paths (18) with the generated image.

6. The display assembly according to any of the preceding claims, wherein actuation of the at least one button (16) and/or dial (32) initiates actuation of the function represented by the image generated on the display (14) and/or wherein activation of the light path (18) responsive to actuation of the at least one button (16) and/or dial (32), respectively, comprises a sequence of illumination that includes a change in the generated image to indicate actuation.

7. A vehicle control assembly comprising:
a display (14) configured to generate images corresponding to at least one graphic feature (20) and indicative of a vehicle function;
a plurality of buttons (16) spaced apart from the display (14); and
a plurality of light paths (18) extending between each of the plurality of buttons (16) and images generated on the display (14), wherein the light paths (18) are illuminable to associate the plurality of buttons (16) with a corresponding image generated on the display (14), wherein the button (16) associated with the generated image activates the function represented by the image generated on the display (14), and provides for actuation of the graphic feature (20) represented by the image,
**characterised in that**
in addition to the plurality of buttons (16) the control display assembly further comprises a dial (32) which is rotatable to select between a first light path (34) and a second light path (36) to provide for actuation of more than one graphic feature (20).

8. The control assembly as recited in claim 7, wherein the light path (18, 34, 36) comprises a plurality of individual light sources (30) oriented between at least one of the plurality of buttons (16), the dial (32) and the display (14) and/or a light source (30) and a light guide (28) illuminable by the light source (30).

9. The control assembly as recited in claim 7 or 8, wherein the display (14) is configured to generate a trace (22) between the light path (18, 34, 36) and the image generated on the display (14) to associate one of the plurality of light paths (18, 34, 36) with the generated image.

10. The control assembly as recited in any of the claims 7 to 9, wherein activation of at least one of the plurality of light paths (18, 34, 36) comprises a sequence of illumination that includes a change in the generated image to indicate actuation.

11. A method of associating control features with desired functions comprising:
generating at least on image on a display (14) the image corresponding to at least one graphic feature indicative of a function;
associating a fixed input device (16) spaced a distance (38) from the display (14) with the image generated on the display (14); and
illuminating a light path (18) extending between the fixed input device (16) and the display (14) to visually indicate the association between the fixed input device (16) and the image generated on the display (14),
**characterised by**
associating a dial (32) spaced a distance (38) from the display (14) with more than one image generated on the display (14) which dial (32) is rotatable to select between a first light path (34) and a second light path (36) to selectively visually indicate the association between the dial (32) and the more than one image generated on the display (14) to provide for actuation of the more than one graphic feature (20).

12. The method as recited in claim 11, wherein illuminating the light path (18, 34, 36) comprises illuminating the light path (18, 34, 36) in a first manner prior to actuation of the input device (16) and/or dial (32) and illuminating the light path (18, 34, 36) in a second manner different than the first manner responsive to actuation of the input device (16) and/or dial (32) to provide visual feedback and confirmation of actuation of a function represented by the generated image.

13. The method as recited in claim 11 or 12, wherein at least one of the first manner and the second manner comprises a lighting animation.

## Patentansprüche

1. Steuerungsanzeigevorrichtungsanordnung, die aufweist:
eine Anzeigevorrichtung (14), die zum Erzeugen von Bildern ausgebildet ist, welche mindestens einem grafischen Merkmal (20) entsprechen und eine Fahrzeugfunktion anzeigen;
mindestens einen Knopf (16), der in einem Abstand (38) zu der Anzeigevorrichtung (14) angeordnet ist;
einen Lichtweg (18), der sich zwischen dem mindestens einen Knopf (16) und der Anzeigevorrichtung (14) erstreckt, wobei der Lichtweg (18) ausgebildet ist zum Aktivieren, wenn der Knopf (16) aktiviert ist, wobei der aktivierte Knopf (16) einer Betätigung einer Fahrzeugfunktion entspricht, die von dem grafischen Merkmal (20) dargestellt wird, das auf der Anzeigevorrichtung (14) erzeugt wird, und
wobei der Lichtweg (18) dem grafischen Merkmal (20) auf der Anzeigevorrichtung (14) entspricht und sich zu diesem erstreckt, wobei das grafische Merkmal (20) dem mindestens einen Knopf (16) zugeordnet ist;
**dadurch gekennzeichnet, dass**
zusätzlich zu dem mindestens einen Knopf (16) die Steuerungsanzeigevorrichtungs-Anordnung ferner einen Drehsteller (32) aufweist, der drehbar ist, um zwischen einem ersten Lichtweg (34) und einem zweiten Lichtweg (36) zu wählen, um eine Betätigung von mehr als einem grafischen Merkmal (20) zu bewirken.

2. Anzeigevorrichtungsanordnung nach Anspruch 1, wobei der Lichtweg (18, 34, 36) eine Vielzahl von einzelnen Lichtquellen (30), die zwischen dem mindestens einen Knopf (16), dem Drehsteller (32) und der Anzeigevorrichtung (14) orientiert sind, und/oder eine Lichtquelle (30) und einen Lichtleiter (28), der durch die Lichtquelle (30) beleuchtbar ist, aufweist.

3. Anzeigevorrichtungsanordnung nach Anspruch 1 oder 2, wobei der mindestens eine Knopf (16) eine Vielzahl von Knöpfen (16) und eine entsprechende Vielzahl von Lichtwegen (18) aufweist, die beleuchtbar sind, um zumindest einige der Vielzahl von Knöpfen (16) Bildern zuzuordnen, die auf der Anzeigevorrichtung (14) erzeugt werden.

4. Anzeigevorrichtungsanordnung nach Anspruch 3, wobei die Anzeigevorrichtung (14) zum Erzeugen von unterschiedlichen Bildern für jeden der Vielzahl von Knöpfen (16) beziehungsweise den Drehsteller (32) für unterschiedliche Fahrzeugsysteme ausgebildet ist.

5. Anzeigevorrichtungsanordnung nach Anspruch 3 oder 4, wobei die Anzeigevorrichtung (14) zum Erzeugen einer Spur (22) zwischen dem Lichtweg (18) und dem Bild, das auf der Anzeigevorrichtung (14) erzeugt wird, ausgebildet ist, um einen der Vielzahl von Lichtwegen (18) dem erzeugten Bild zuzuordnen.

6. Anzeigevorrichtungsanordnung nach einem der vorhergehenden Ansprüche, wobei die Betätigung des mindestens einen Knopfs (16) und/oder des Drehstellers (32) die Betätigung der Funktion, die von dem auf der Anzeigevorrichtung (14) erzeugten Bild dargestellt wird, initiiert und/oder wobei die Aktivierung des Lichtwegs (18) in Reaktion auf die Betätigung des mindestens einen Knopfs (16) und/oder des Drehstellers (32) eine Beleuchtungssequenz aufweist, die eine Veränderung des erzeugten Bilds zum Anzeigen der Betätigung umfasst.

7. Fahrzeugsteuerungsanordnung, die aufweist:
eine Anzeigevorrichtung (14), die zum Erzeugen von Bildern ausgebildet ist, welche mindestens einem grafischen Merkmal (20) entsprechen und eine Fahrzeugfunktion anzeigen;
eine Vielzahl von Knöpfen (16), die von der Anzeigevorrichtung (14) beabstandet sind; und
eine Vielzahl von Lichtwegen (18), die sich zwischen jedem der Vielzahl von Knöpfen (16) und Bildern, die auf der Anzeigevorrichtung (14) erzeugt werden, erstrecken, wobei die Lichtwege (18) beleuchtbar sind, um die Vielzahl von Knöpfen (16) einem entsprechenden Bild zuzuordnen, das auf der Anzeigevorrichtung (14) erzeugt wird, wobei der Knopf (16), der dem erzeugten Bild zugeordnet ist, die Funktion aktiviert, die von dem Bild dargestellt wird, das auf der Anzeigevorrichtung (14) erzeugt wird und eine Betätigung des grafischen Merkmals (20), das von dem Bild dargestellt wird, bewirkt,
**dadurch gekennzeichnet, dass**
zusätzlich zu der Vielzahl von Knöpfen (16) die Steuerungsanzeigevorrichtungsanordnung ferner einen Drehsteller (32) aufweist, der drehbar ist, um zwischen einem ersten Lichtweg (34) und einem zweiten Lichtweg (36) zu wählen, um eine Betätigung von mehr als einem grafischen Merkmal (20) zu bewirken.

8. Steuerungsanordnung nach Anspruch 7, wobei der Lichtweg (18, 34, 36) eine Vielzahl von einzelnen Lichtquellen (30), die zwischen dem mindestens einen der Vielzahl von Knöpfen (16), dem Drehsteller (32) und der Anzeigevorrichtung (14) orientiert sind, und/oder eine Lichtquelle (30) und einen Lichtleiter (28), der durch die Lichtquelle (30) beleuchtbar ist, aufweist.

9. Steuerungsanordnung nach Anspruch 7 oder 8, wobei die Anzeigevorrichtung (14) zum Erzeugen einer Spur (22) zwischen dem Lichtweg (18, 34, 36) und dem Bild, das auf der Anzeigevorrichtung (14) erzeugt wird, ausgebildet ist, um einen der Vielzahl von Lichtwegen (18, 34, 36) dem erzeugten Bild zuzuordnen.

10. Steuerungsanordnung nach einem der Ansprüche 7 bis 9, wobei die Aktivierung mindestens eines der Vielzahl von Lichtwegen (18, 34, 36) eine Beleuchtungssequenz aufweist, die eine Veränderung des erzeugten Bilds zum Anzeigen der Betätigung umfasst.

11. Verfahren zum Zuordnen von Steuerungsmerkmalen zu gewünschten Funktionen, das aufweist:
Erzeugen mindestens eines Bilds auf einer Anzeigevorrichtung (14), wobei das Bild mindestens einem grafischen Merkmal, das eine Funktion anzeigt, entspricht;
Zuordnen einer feststehenden Eingabevorrichtung (16), die in einem Abstand (38) zu der Anzeigevorrichtung (14) beabstandet ist, zu dem Bild, das auf der Anzeigevorrichtung (14) erzeugt wird; und
Beleuchten eines Lichtwegs (18), der sich zwischen der feststehenden Eingabevorrichtung (16) und der Anzeigevorrichtung (14) erstreckt, um die Zuordnung zwischen der feststehenden Eingabevorrichtung (16) und dem Bild, das auf der Anzeigevorrichtung (14) erzeugt wird, visuell anzuzeigen,
**gekennzeichnet durch**
Zuordnen eines Drehstellers (32), der in einem Abstand (38) zu der Anzeigevorrichtung (14) beabstandet ist, zu mehr als einem Bild, das auf der Anzeigevorrichtung (14) erzeugt wird, wobei der Drehsteller (32) drehbar ist, um zwischen einem ersten Lichtweg (34) und einem zweiten Lichtweg (36) zu wählen, um die Zuordnung zwischen dem Drehsteller (32) und dem mehr als einen Bild, das auf der Anzeigevorrichtung (14) erzeugt wird, selektiv visuell anzuzeigen, um eine Betätigung des mehr als einen grafischen Merkmals (20) zu bewirken.

12. Verfahren nach Anspruch 11, wobei das Beleuchten des Lichtwegs (18, 34, 36) das Beleuchten des Lichtwegs (18, 34, 36) auf eine erste Weise vor der Betätigung der Eingabevorrichtung (16) und/oder des Drehstellers (32) und das Beleuchten des Lichtwegs (18, 34, 36) auf eine zweite Weise, die sich von der ersten Weise unterscheidet, in Reaktion auf die Betätigung der Eingabevorrichtung (16) und/oder des Drehstellers (32), um ein visuelles Feedback und eine Bestätigung der Betätigung einer Funktion, die von dem erzeugten Bild dargestellt wird, zu bewirken, aufweist.

13. Verfahren nach Anspruch 11 oder 12, wobei mindestens eine der ersten Weise und der zweiten Weise eine Beleuchtungsanimation aufweist.

## Revendications

1. Ensemble écran de contrôle comprenant :
un écran (14) configuré pour générer des images correspondant à au moins une caractéristique graphique (20) et représentatives d'une fonction d'un véhicule ;
au moins un bouton (16) disposé à une distance (38) dudit écran (14) ;
un chemin lumineux (18) s'étendant entre l'au moins un bouton (16) et l'écran (14), le chemin lumineux (18) étant configuré pour s'activer quand le bouton (16) est activé, lequel bouton activé (16) correspond à l'actionnement d'une fonction d'un véhicule représentée par la caractéristique graphique (20) générée sur l'écran (20), et
le chemin lumineux (18) correspondant à et s'étendant jusqu'à la caractéristique graphique (20) sur l'écran (14), la caractéristique graphique (20) étant associée à l'au moins un bouton (16) ;
**caractérisé en ce que**
en plus de l'au moins un bouton (16), l'ensemble écran de contrôle comprend également un cadran (32) qui est rotatif pour choisir entre un premier chemin lumineux (34) et un deuxième chemin lumineux (36) pour assurer l'actionnement de plus d'une caractéristique graphique (20).

2. Ensemble écran selon la revendication 1, dans lequel le chemin lumineux (18, 34, 36) comprend une pluralité de sources de lumière individuelles (30) orientées entre l'au moins un bouton (16), le cadran (32) et l'écran (14) et/ou une source de lumière (30) et un guide de lumière (28) éclairable par la source de lumière (30).

3. Ensemble écran selon la revendication 1 ou 2, dans lequel l'au moins un bouton (16) comprend une pluralité de boutons (16) et une pluralité correspondante de chemins lumineux (18) éclairables pour associer au moins certains de la pluralité de boutons (16) à des images générées sur l'écran (14).

4. Ensemble écran selon la revendication 3, dans lequel l'écran (14) est configuré pour générer différentes images pour chacun de la pluralité de boutons (16) et le cadran (32), respectivement, pour différents systèmes de véhicule.

5. Ensemble écran selon la revendication 3 ou 4, dans lequel l'écran (14) est configuré pour générer une trace (22) entre le chemin lumineux (18) et l'image générée sur l'écran (14) pour associer un de la pluralité de chemins lumineux (18) à l'image générée.

6. Ensemble écran selon l'une quelconque des revendications précédentes, dans lequel l'actionnement de l'au moins un bouton (16) et/ou du cadran (32) initie l'actionnement de la fonction représentée par l'image générée sur l'écran (14) et/ou dans lequel l'activation du chemin lumineux (18) en réponse à l'actionnement de l'au moins un bouton (16) et/ou du cadran (32), respectivement, comprend une séquence d'éclairage qui comporte un changement dans l'image générée pour indiquer l'actionnement.

7. Ensemble de contrôle de véhicule comprenant :
un écran (14) configuré pour générer des images correspondant à au moins une caractéristique graphique (20) et représentatives d'une fonction d'un véhicule ;
une pluralité de boutons (16) espacés de l'écran (14) ; et
une pluralité de chemins lumineux (18) s'étendant entre chacun de la pluralité de boutons (16) et des images générées sur l'écran (14), les chemins lumineux (18) étant éclairables pour associer la pluralité de boutons (16) à une image correspondante générée sur l'écran (14), le bouton (16) associé à l'image générée activant la fonction représentée par l'image générée sur l'écran (14), et assurant l'actionnement de la caractéristique graphique (20) représentée par l'image,
**caractérisé en ce que**
en plus de la pluralité de boutons (16), l'ensemble écran de contrôle comprend également un cadran (32) qui est rotatif pour choisir entre un premier chemin lumineux (34) et un deuxième chemin lumineux (36) pour assurer l'actionnement de plus d'une caractéristique graphique (20).

8. Ensemble de contrôle selon la revendication 7, dans lequel le chemin lumineux (18, 34, 36) comprend une pluralité de sources de lumière individuelles (30) orientées entre au moins un de la pluralité de boutons (16), le cadran (32) et l'écran (14) et/ou une source de lumière (30) et un guide de lumière (28) éclairable par la source de lumière (30).

9. Ensemble de contrôle selon la revendication 7 ou 8, dans lequel l'écran (14) est configuré pour générer une trace (22) entre le chemin lumineux (18, 34, 36) et l'image générée sur l'écran (14) pour associer un de la pluralité de chemins lumineux (18, 34, 36) à l'image générée.

10. Ensemble de contrôle selon l'une quelconque des revendications 7 à 9, dans lequel l'activation d'au moins un de la pluralité de chemins lumineux (18, 34, 36) comprend une séquence d'éclairage qui comporte un changement dans l'image générée pour indiquer l'actionnement.

11. Procédé consistant à associer des caractéristiques de contrôle à des fonctions souhaitées comprenant les étapes suivantes :
générer au moins une image sur un écran (14), l'image correspondant à au moins une caractéristique graphique représentative d'une fonction ;
associer un dispositif d'entrée fixe (16) espacé d'une distance (38) de l'écran (14) à l'image générée sur l'écran (14) ; et
éclairer un chemin lumineux (18) s'étendant entre le dispositif d'entrée fixe (16) et l'écran (14) pour indiquer visuellement l'association entre le dispositif d'entrée fixe (16) et l'image générée sur l'écran (14),
**caractérisé par** l'étape suivants :
associer un cadran (32) espacé d'une distance (38) de l'écran (14) à plus d'une image générée sur l'écran (14), lequel cadran (32) est rotatif pour choisir entre un premier chemin lumineux (34) et un deuxième chemin lumineux (36) pour indiquer visuellement de façon sélective l'association entre le cadran (32) et les images générées sur l'écran (14) pour assurer l'actionnement des caractéristiques graphiques (20).

12. Procédé selon la revendication 11, dans lequel l'éclairage du chemin lumineux (18, 34, 36) comprend l'éclairage du chemin lumineux (18, 34, 36) d'une première manière avant l'actionnement du dispositif d'entrée (16) et/ou du cadran (32) et l'éclairage du chemin lumineux (18, 34, 36) d'une deuxième manière différente de la première manière en réponse à l'actionnement du dispositif d'entrée (16) et/ou du cadran (32) pour fournir un retour visuel et une confirmation de l'actionnement d'une fonction représentée par l'image générée.

13. Procédé selon la revendication 11 ou 12, dans lequel la première manière et/ou la deuxième manière comprennent une animation d'éclairage.
